# EUROPEAN PATENT SPECIFICATION

(11) **EP 2 781 243 B1**
(45) Date of publication and mention of the grant of the patent: **25.10.2017**
(21) Application number: 14160985.9
(22) Date of filing: 21.03.2014
(51) Int. Cl.: A63F 3/00, A63F 9/02, A63F 1/04, A63F 9/00

(54) **Board game instrument for learning**
Brettspielinstrument zum Lernen
Instrument de jeu de société pour l'apprentissage

(30) Priority: 23.03.2013 KR 20130031206
(43) Date of publication of application: 24.09.2014
(73) Proprietor: Korea Board Games Co., Ltd., Paju-si, Gyunggi-do 413-841 (KR)
(72) Inventor: Kim, Gil-Oh, 412-719 Goyang-si, Gyunggi-do (KR)
(74) Representative: Fortuna, Jevgenijs

(56) References cited:
- WO-A1-99/56844
- WO-A2-2006/133011
- US-A- 1 542 063
- US-A1- 2007 110 930
- US-A1- 2010 044 962

## Description

### BACKGROUND OF THE INVENTION

The present invention disclosed herein relates to a board game instrument for learning, and more particularly, to a board game instrument for learning, which allows a board game player to improve aiming ability and concentrating ability through fine strength control while trying to throw a coconut in a basket using a monkey launch pad and erect the baskets in pyramid pattern on the game board first.

A board game is a game played on a board with game pieces or cards according to a certain rule. Board games are specifically divided into card games played with cards and board games which are characterized by dices and pieces representing warriors and horses. Generally, however, both are comprehensively referred to as board games. Since board game players enjoy playing the game face-to-face with others, board games offer unique taste different from computer games that players play by themselves.

Recently, board games vary much in kind to be about 10,000 in total and cover a wide variety of themes ranging from territorial expansion and property acquisition to pro-social matters such as environmental protection and gender equality

Germany is counted as a major board game consuming and producing nation. Many of currently popular board games in Korea are also German-produced. Since the year 2000, board game cafes are spreading throughout the country in Korea and board game culture is tremendously growing.

In addition, board games are not simply limited to a game in recent time, but there is a trend to use board games for creativity education for children. Accordingly, a great deal of research is being conducted on the development of educational board games. According to the results of professional researches, one of the educational methods that can maximize the creativity development is to stimulate imagination through plays. That is, the creative problem-solving ability can be cultivated through plays that attract and interest children, rather than a simple memorization of knowledge or acquisition of technique.

In compliance with the trend, a number of tools or toys for learning through play are currently out on the market. However, the tools and toys on the market are so simple in structure and function and so low in level as to be mostly used only for simple amusement, with little learning effect, particularly of nurturing creativity.

Also, life expectancy of every country is recently on the rise due to the economic growth and medical advances. Accordingly, since elderly troubles such as dementia are also on the rise, measures for the treatment or prevention of the troubles are needed.

Accordingly, when a game tool for learning is developed, which has an excellent learning effect for creativity and concentration for children and has an effect of preventing such elderly trouble as dementia for elderly people, the game tool can be greatly welcomed by consumers.

There is known an apparatus for playing a board game comprising: a board adapted to provide at least one playing surface wherein a first playing surface is provided with at least one feature providing at least one selectively positioned geometric shape around which a participant may cast a suitably sized and shaped projectile; and associated with said board there is provided one of a pivot and a track for movement of said board, said board including means to demarcate a second playing surface into a selected number of zones which represent a play area onto which a participant may cast a suitably sized and shaped projectile, said board being provided with an indicator wherein when board rotation ceases said indicator identifies a selected play zone (WO 99/56844 A1).

There is also known a game board comprising a flat boards, a hook thereon, a bucket, means on said bucket for suspending engagement with said hook, slots in the lower edge of said board and correspondingly slotted supporting strips adapted for interlocking therewith and retaining the board in upright position (US 1542063 A).

### SUMMARY OF THE INVENTION

The present invention provides a board game instrument for learning, which allows users of varied ages from children to the elderly to improve aiming ability and concentrating ability through fine strength control while trying to throw a coconut in a basket using a monkey launch pad and erect the baskets in pyramid pattern on the game board first.

The present invention also provides a board game instrument for learning, which is simple but can induce fun and interest to a player by applying a shooting game using a monkey launch pad and can engross the player in the game.

Embodiments of the present invention provide board game instruments for learning, according to claim 1.

In other embodiments, the baskets may be differentiated by two or more different colors, providing different options when the projectile enters the basket during the game

In still other embodiments, the game board may include: a basket area allowing one row of baskets or two or more rows of baskets to be placed therein; and a boundary part disposed at one side of the game board and having a staff shape dividing a gaming venue into inside and outside.

In even other embodiments, the gaming venue may be an area in which the baskets are placed between the game boards of players, a shape of which varies according to the number of players.

### BRIEF DESCRIPTION OF THE DRAWINGS

FIG. 1 is a view illustrating a board game instrument for learning according to an embodiment of the present invention.
FIG. 2A is a view illustrating a structure of coconut projectiles shown in FIG. 1;
FIG. 2B is a view illustrating a structure of a monkey launch pad shown in FIG. 1;
FIG. 2C is a view illustrating a structure of baskets shown in FIG. 1;
FIG. 2D is a view illustrating a structure of a game board shown in FIG. 1;
FIG. 2F is a view illustrating a structure of a magic card shown in FIG. 1;
FIGS. 3A to 3F are views illustrating various examples of a magic card shown in FIG. 1;
FIG. 4 is a view illustrating a board game instrument for learning according to another embodiment of the present invention; and
FIGS 5a to 5c are views illustrating a process of a game using a board game instrument for learning according to an embodiment of the present invention.

### DETAILED DESCRIPTION OF PREFERRED EMBODIMENTS

Preferred embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Hereinafter, it will be described about an exemplary embodiment of the present invention in conjunction with the accompanying drawings.

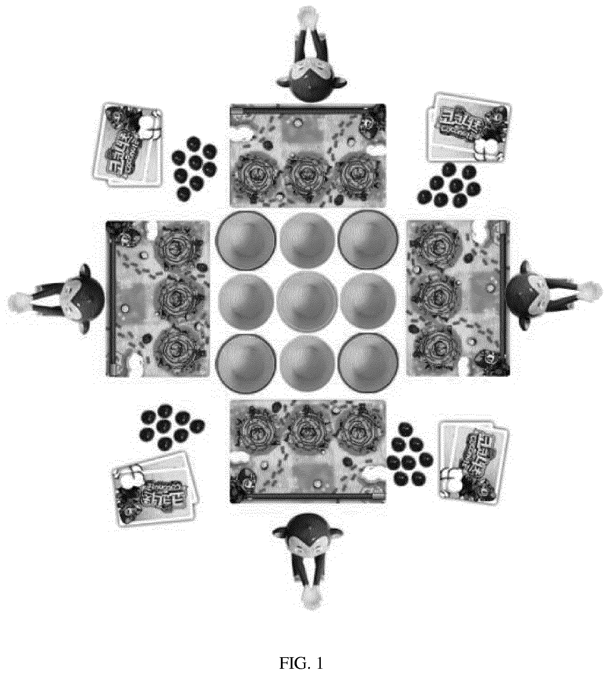

FIG. 1 is a view illustrating a board game instrument for learning according to an embodiment of the present invention.

As shown in FIG. 1, a board game instrument for learning may include projectiles, launch pads, baskets, game boards and magic cards.

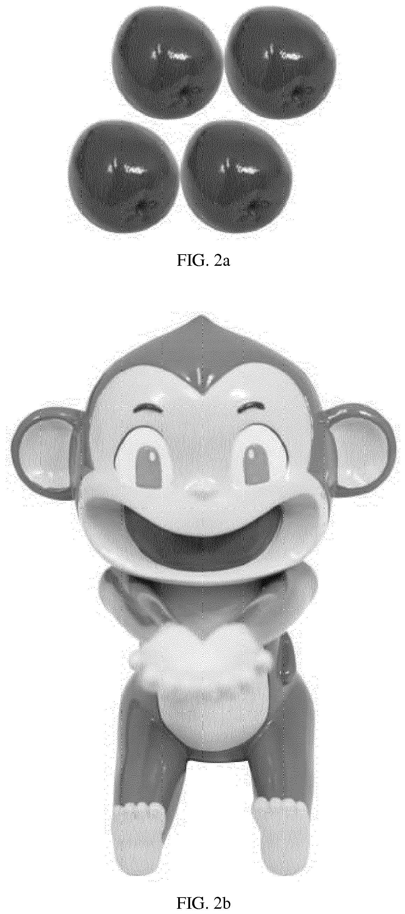

As shown in FIG. 2A, the projectiles may be configured to have a coconut shape, and may include at least two or more coconuts. Here, the projectiles may be formed of a plastic material, and may be formed in a spherical shape. However, in one embodiment, the projectiles may also be formed of materials such as paper, fabric, or metal, and may also be configured to have a polygonal shape. In other words, the shape of projectiles is not limited to the coconut shape, but any shape of projectile is possible as long as the projectiles can be shot into baskets by the launch pad.

As shown in FIG. 2B, the launch pad may be formed in a monkey shape that uses elastic force to shoot a projectile. The elastic force may be generated from rubber string and spring. The launch pad includes an elastic launching part where a projectile is located, which moves up and down, and which launches the projectile by elastic force, and a fixed supporting part that supports the elastic launching part and prevents the elastic launching part from moving left to right. The launch pad may be shaped like a monkey, which is only one embodiment of the invention intended to give interest and amusement, and may be formed in various shapes such as an animal, a rocket, a lever, and a catapult. According to the type of launch pad, the type of the projectile may change. For example, when the launch pad is a rocket launch pad, the projectile may be formed in a rocket missile shape.

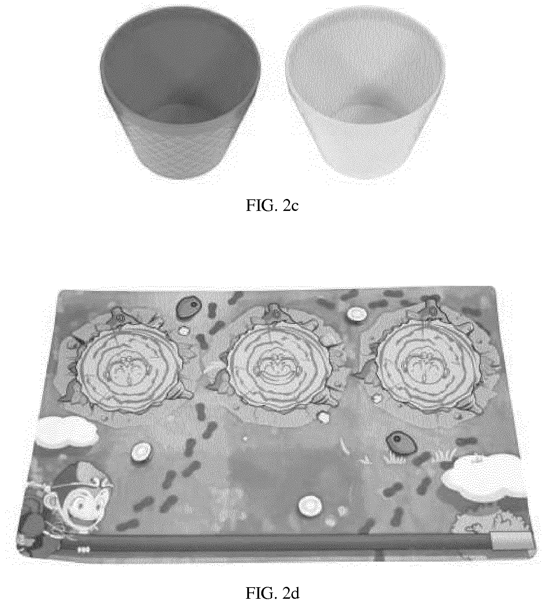

As shown in FIG. 2C, the baskets include at least two baskets, and are formed to have a concave shape such that the basket can contain the projectile shot by the launch pad. In this case, the baskets may be differentiated by two or more different colors, providing different options when the projectile enters the basket during the game. In one embodiment, when a projectile enters a basket of basic color, one shot is allowed. When a projectile enters a basket of other color with an option set, one more shot is allowed. Also, the basket are configured to have a flat rim on the top and a flat surface on the bottom and to have a top surface larger than a bottom surface.

The game board includes an area where baskets are placed as shown in FIG. 2D, and is configured to such that three or more baskets acquired in the game are stacked up into a pyramid of two or more tiers on the area. In this case, the basket area of the game board may be formed in one row or two or more rows. Also, the game board may include a boundary part that divides the inside and outside of a gaming venue. In this case, the boundary part may be formed to have a shape of a magic staff ("Yeoui-bong"), which is related to a monkey shape of the launch pad. The boundary part may be formed to take shapes according to the shape of launch pad. That is, the boundary part may be formed to have any shape of a cylinder whose cross section is a circle or a polygon. The boundary part may also be provided in a printed form on a game board.

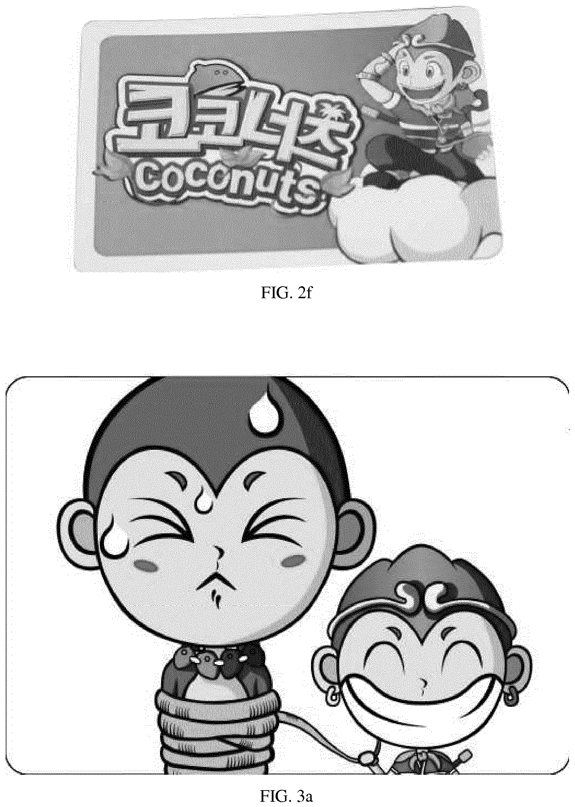

As shown in FIG. 2F, the magic cards may include at least two magic cards with different game commands printed thereon. During the game play, a player may produce at least one magic card to himself/herself or other players so as to lead the game to his/her favor.

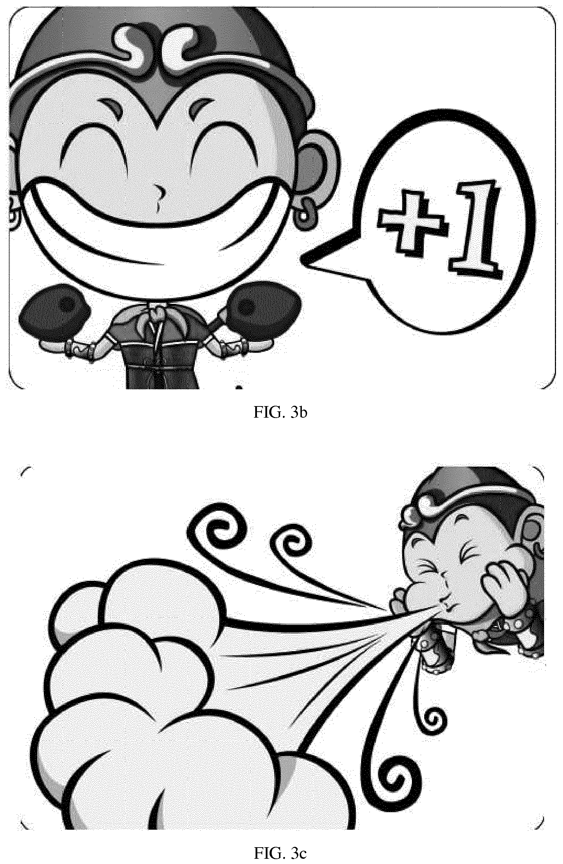

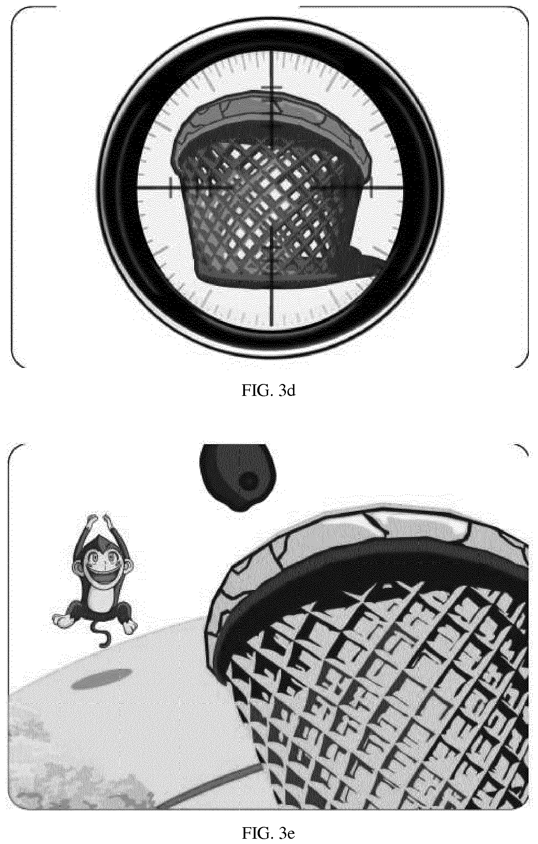

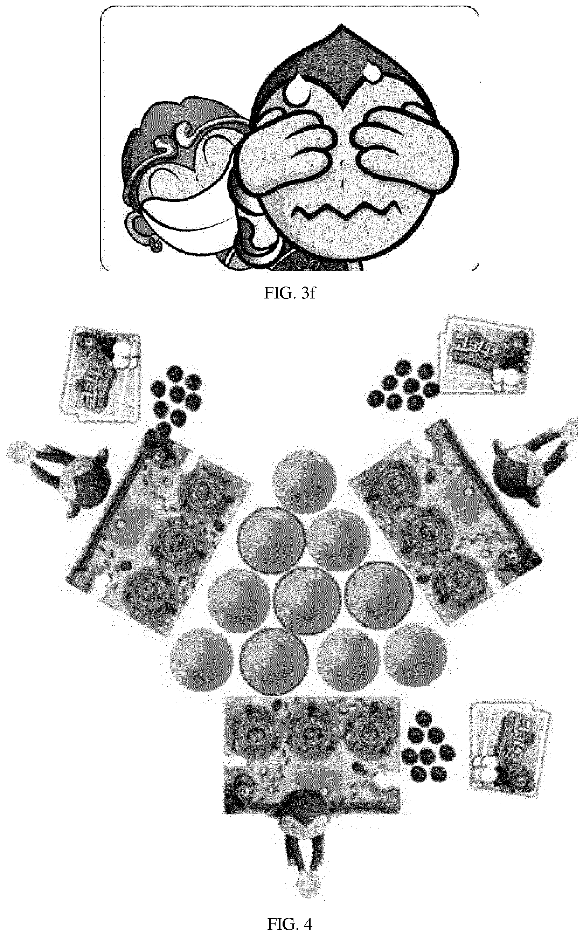

In the case, the magic cards may include a "Freeze" magic card, as shown in FIG. 3A, which allows a current player to give up a shooting turn to a next player when the "Freeze" magic card is produced, "Coconut Cloning" magic card as shown in FIG. 3B, which allows a current player to shoot one more time when the current player produces the card, "Blow Wind" magic card, as shown in FIG. 3C, that allows a player who produces the card to a next shooter to blow or make wind with a paper to disturb the shooting, "Shoot Here" magic card, as shown in FIG. 3D, which allows a next shooter to shoot a coconut only in a basket designated by a card presenter, "Distant Shot" magic card, as shown in FIG. 3E, which allows a next shooter to shoot a coconut at least an arm-length away from the magic staff ("Yeoui-bong") when the "Distant Shot" magic card is produced to the next shooter, and "Guess Who" magic card, as shown in FIG. 3F, which allows a next shooter to shoot a coconut with his/her eyes shut when the "Guess Who" magic card is produced to the next shooter.

Meanwhile, according to the embodiments of the present invention, as shown in FIG.1, when 2 or 4 players play a game on a board game instrument for learning, a square gaming venue may be needed, but when 3 players play, as shown in FIG. 4, a triangle gaming venue may be needed. Various shapes of the gaming venue may be needed according to the number of players.

Hereinafter, a method of playing game using a board game instrument for learning according to the embodiment of the present invention will be described as follows.

First, each player may be provided with one launch pad, one game board, at least one coconut, and at least one magic card. Thereafter, each player may place the game board at one side of the basket row, and may place the magic staff ("Yeoui-bong") at the player's side. Then, as shown in FIG. 1 or 4, the baskets may be located inside the gaming venue. In this case, yellow baskets and red baskets including options may be located to overlap each other. Thus, the game preparation may be completed.

Each player takes a turn to shoot a coconut projectile using the monkey launch pad. In this case, the monkey launch pad may be allowed not to go over the magic staff ("Yeoui-bong"). Meanwhile, as long as the monkey launch pad is not over the magic staff, the player can place the monkey launch pad on the floor or hold the monkey launch pad.

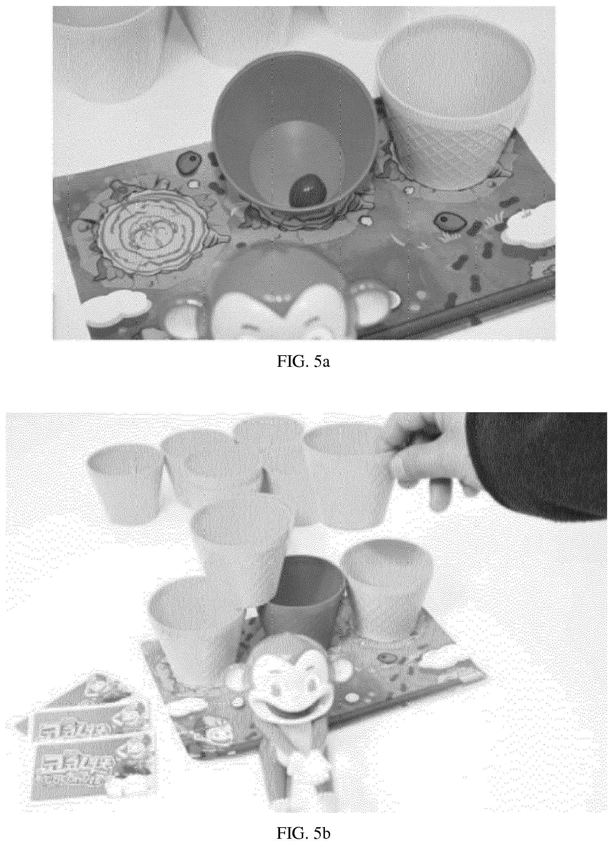

Next, when the coconut projectile shot by the player enters a basket, the player may take the basket, and bring the basket over to his game board and place the basket on the basket area of the game board as shown in FIG. 5A. In this case, when baskets are put on the basket area of the game board, the player may pile the baskets like a pyramid as shown in FIG. 5B.

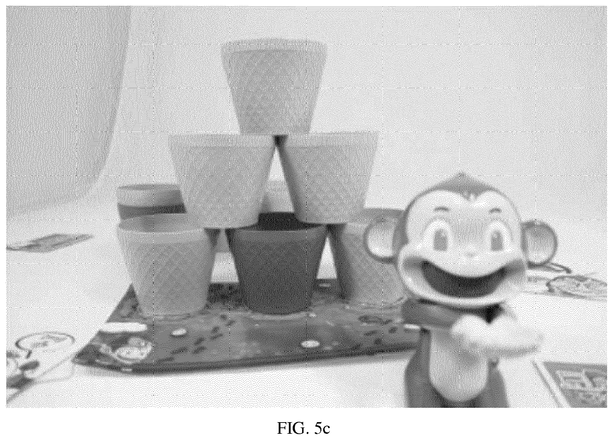

When any player completes the basket pyramid as shown in FIG. 5C or all the coconut projectiles enter baskets, the game may be finished.

Accordingly, a player who completes the pyramid first may become a winner. When all the coconut projectiles enter baskets and the game is finished, a player having more coconut projectiles contained in the baskets may become a winner. When the numbers of coconut projectiles contained in the baskets are the same between players, the player who took the last turn to shoot may become a winner.

Meanwhile, when a coconut projectile that is shot enters a basket that other player placed on the game board of the player during the game, it may be allowed to take the basket from the player.

Also, when a coconut projectile enters a red basket with an option, it may be allowed to shoot another coconut projectile using the launch pad after the red basket is taken. Coconuts that are put in baskets can never be taken away from the baskets. However, players may again use the coconuts that were shot from the launch pad but not entered baskets.

A player with the shooting turn has to wait for a few seconds until the shooting such that other players can use a magic card. Other players may produce a magic card to themselves or to a current player to lead the game to their favor.

Additionally, as modified game rules, the game may be played without magic cards, or the position of red basket including options may be changed among the overlapped baskets. Also, the game may be played with more or fewer magic cards shared by players.

Also, as another modified game rule, players may play the game by piling a pyramid with baskets regardless of the color of baskets.

A board game instrument for learning, according to the embodiments of the present invention, may have the following effects:

First, a board game user of varied ages from a child to an elderly person can improve aiming ability and concentrating ability through fine control of strength, and can have multi-functional brain training in active and amusing manners.

Second, the game may be simple but can induce interest and fun to allow players to be engrossed in the game.

Third, even a small group of players like one parent and a child can be engrossed in the game while being sufficiently interested in the game.

The above-disclosed subject matter is to be considered illustrative, and not restrictive, and the appended claims are intended to cover all such modifications, enhancements, and other embodiments, which fall within the scope of the present invention. Thus, to the maximum extent allowed by law, the scope of the present invention is to be determined by the broadest permissible interpretation of the following claims, and shall not be restricted or limited by the foregoing detailed description.

## Claims

1. A board game instrument for learning, comprising:
at least two projectiles, adapted to be thrown in a basket;
at least three baskets formed to be concave so as to allow holding the projectile and having a rim of a top surface and a bottom surface thereof formed to be flat;
a game board comprising an area in which the baskets, in use, are placed; and
at least two cards comprising different game commands printed thereon, **characterized in that** the board game instrument further comprises a launch pad for launching the projectile using an elastic force, wherein the launch pad comprises:
an elastic launching part allowing the projectile to be located therein and launching the projectile by the elastic force while moving up and down, and a fixed supporting part for supporting the elastic launching part and preventing the elastic launching part from moving left to right;
and **in that** the at least three baskets are configured to have a top surface larger than a bottom surface, wherein the area and the at least three baskets are configured such that at least three baskets, in use, are stacked up into a pyramid of two or more tiers on the area.

2. The board game instrument of claim 1, wherein the baskets are differentiated by two or more different colors.

3. The board game instrument of claim 1, wherein the game board comprises:
a basket area allowing one row of baskets or two or more rows of baskets to be placed therein; and
a boundary part disposed at one side of the game board and having a shape dividing a gaming venue into inside and outside.

4. The board game instrument of claim 3, further comprising more than one game boards as per claim 1, wherein the gaming venue is an area between the game boards, in which the baskets, in use, are placed.

## Patentansprüche

1. Ein Spielbrett zum Lernen, umfassend:
mindestens zwei Wurfkörper, die so gestaltet sind, dass sie in einen Korb geworfen werden können;
mindestens drei Körbe mit konkaver Form, die den Wurfkörper aufnehmen und einen Rand an der Oberseite und einen flach geformten Boden an der Unterseite haben;
ein Spielbrett mit einem Bereich, in dem die verwendeten Körbe aufgestellt sind
und
mindestens zwei Karten, auf denen unterschiedliche Spielregeln aufgedruckt sind,
**dadurch gekennzeichnet, dass** das Spielbrett ferner umfasst: eine Startfläche zum Werfen des Wurfkörpers mit elastischer Kraft, wobei die Startfläche Folgendes umfasst:
ein elastisches Startteil, welches den Wurfkörper aufnimmt und den Wurfkörper bei Auf- und Abwärtsbewegungen mit elastischer Kraft wirft; und
eine feststehende Halterung, die das elastische Startteil stützt und verhindert, dass sich das elastische Startteil nach links oder rechts bewegt;
wobei mindestens drei Körbe so gestaltet sind, dass ihre Oberfläche größer ist als der Korbboden, wobei der Bereich und mindestens drei Körbe derart gestaltet sind, das mindestens drei verwendete Körbe in diesem Bereich zu einer Pyramide von zwei oder mehr Stufen aufeinandergestapelt sind.

2. Spielbrett nach Anspruch 1, wobei sich die Körbe durch zwei oder mehr unterschiedliche Farben voneinander unterscheiden.

3. Spielbrett nach Anspruch 1, wobei das Spielbrett umfasst:
einen Korbbereich, in dem eine Korbreihe oder zwei oder mehrere Korbreihen aufgestellt werden können; und
ein Begrenzungsteil, das sich an einer Seite des Spielbretts befindet und eine Form besitzt, die den Spielbereich nach innen und außen abgrenzt.

4. Spielbrett nach Anspruch 3, ferner umfassend: mehr als ein Spielbrett gemäß Anspruch 1, wobei der Spielbeginn ein Bereich ist, der sich zwischen den Spielbrettern befindet, in dem die verwendeten Körbe aufgestellt sind.

## Revendications

1. Instrument de jeu de plateau pour l'apprentissage, comprenant :
au moins deux projectiles, conçus pour être lancés dans un panier ;
au moins trois paniers formés pour être concaves de façon à permettre de maintenir le projectile et possédant un rebord d'une surface supérieure et une surface inférieure de celui-ci formée pour être plate ;
un plateau de jeu comprenant une zone dans laquelle sont placés les paniers, lors de l'utilisation
et
au moins deux cartes comprenant différentes commandes de jeu imprimées sur celles-ci,
**caractérisé en ce que** l'instrument de jeu de plateau comprend en outre une plate-forme de lancement pour le lancement du projectile à l'aide d'une force élastique, dans lequel la plate-forme de lancement comprend :
une partie élastique de lancement permettant au projectile de s'y trouver et lançant le projectile par la force élastique tout en montant et en descendant, et
une partie de support fixe destinée à supporter la partie élastique de lancement et à empêcher la partie élastique de lancement de se mouvoir de gauche à droite ;
et **en ce que** les au moins trois paniers sont configurés pour avoir une surface supérieure plus grande qu'une surface inférieure, dans lequel la zone et les au moins trois paniers sont configurés de telle sorte qu'au moins trois paniers, lors de l'utilisation, sont empilés dans une pyramide de deux niveaux ou plus sur la zone.

2. Instrument de jeu de plateau selon la revendication 1, dans lequel les paniers sont différenciés par deux couleurs différentes ou plus.

3. Instrument de jeu de plateau selon la revendication 1, dans lequel le plateau de jeu comprend :
une zone de panier permettant à une rangée de paniers ou à deux rangées de paniers ou plus d'y être placées ; et
une partie de limite disposée au niveau d'un côté du plateau de jeu et possédant une forme divisant un lieu de jeu en une partie intérieure et une partie extérieure.

4. Instrument de jeu de plateau selon la revendication 3, comprenant en outre plus d'un plateau de jeu selon la revendication 1, dans lequel le lieu de jeu est une zone entre les plateaux de jeu, dans laquelle sont placés les paniers, lors de l'utilisation.
